# EUROPEAN PATENT APPLICATION

(11) **EP 2 431 439 A2**
(43) Date of publication of application: **21.03.2012**
(21) Application number: 11181430.7
(22) Date of filing: 15.09.2011
(51) Int. Cl.: C09J 11/06, C09J 7/04, A24D 1/02, A24F 17/00

(54) **Rolling paper structures for creating smoking articles and adhesives for same**

(30) Priority: 17.09.2010 US 884728
(71) Applicant: Kesselman, Joshua D., Phoenix AZ 3315 (US)
(72) Inventor: Kesselman, Joshua D., Phoenix AZ 3315 (US)
(74) Representative: Naeven, Ralf

(57) **Abstract**

A rolling paper is presented, comprising a paper having a total height and a width; a first adhesive (440) disposed along a width edge (420) of the paper, wherein the first adhesive (440) comprises a hemp additive; and a second adhesive (430) disposed along a height edge (410) of the paper, wherein the second adhesive comprises the hemp additive. Furthermore, a method for preparing an adhesive for rolling papers is proposed, comprising the steps of dissolving an adhesive in water to form an adhesive solution; suspending a hemp powder in water to form a hemp solution; and mixing the hemp solution with the adhesive solution.

## Description

### BACKGROUND OF THE INVENTION

The present invention relates generally to paper products used by an end user to create their own cigars or cigarettes. In particular, the present invention relates to a paper for rolling tobacco into a cigar or cigarette and adhesives for same. This application claims priority of US application 2011/0030710, published on February 10, 2011 and being a continuation-in-part of U.S. Patent Application Serial No. 11/763,865, filed on June 15, 2007, for "Structures for Creating Smoking Articles and Methods of Packaging Same."

Materials or papers used for rolling smoking articles, such as cigars or cigarettes, may be made from a variety of materials such as reconstituted tobacco and paper. These products are commonly referred to as rolling papers or cigarette papers. Typically such papers or "leaves" have an edge coated with adhesive for sealing the rolled smoking article. Conventionally, rolling papers are sold in packs that include several interleaved papers, each folded in half intertwined with one and other. The lower half of each paper provides sufficient resistance to expose the upper half the next paper sheet within an aperture in the top of the pack so that the second sheet can be easily removed as desired. The removed rolling papers are then rolled and sealed using the adhesive, which adhesive properties may be activated by saliva.

However, the half-way fold often does not allow for efficient rolling and sealing of the paper and may result in undesirable characteristics in the smoking product, such as a loosely or improperly rolled cigarette. This can result in uneven or ineffective burning of the tobacco products. As a result, the rolling papers have to be refolded or torn to resize the papers before using, which can damage the paper and/or provide air channels with the existing or new folds, thereby providing a less than satisfactory smoking product made with the rolling papers. In addition, if the end user desires to make a cigar or cigarette with a certain diameter, it may be necessary to resize the paper by tearing or other means to remove part of the side that does not include the adhesive strip before rolling the cigar or cigarette. Hence, for conventional rolling papers, it is inconvenient to have to refold or resize the paper and those actions may result in cigars or cigarettes that have undesirable characteristics or are inconsistent in size.

Also, when the rolling papers are folded in half, the adhesive may contact and inadvertently adhere to another part of the rolling paper, such as the far edge of the paper. An inadvertent adherence of the adhesive portion of the rolling paper may make the tobacco rolling and sealing process difficult, render the rolling paper useless for the intended purpose or result in the paper becoming less than effective for the rolling and sealing process.

Further, conventional rolling papers are sold at standard heights. Containers for holding such papers are designed for the half-folded paper and may not be suitable for rolling papers having different heights than normally used and having a fold that is off-center.

Therefore, there is a need for an improved rolling paper so that it can be used by an end user to create cigar or cigarette of the desired diameter without the need to refold or resize the paper and to improve the packaging for those papers so that it can effectively dispense the improved paper.

In the following are described methods and structures for paper structures used by an end user to create a cigar or cigarette and for packaging those paper structures. A paper includes a first paper section having a first height, a second paper section coupled to the first paper section and the second paper section having a second height longer than the first height, a fold disposed between the first paper section and the second paper section, and an adhesive disposed on the second paper section having an orientation facing the first paper section. In one embodiment of the paper structure, when folded between the first and second paper sections, the paper structure may have a adhesive on the inner side of the second paper section, and the fold located between the first and second paper sections is positioned to allow the end user to create a cigar or cigarette of a certain size without refolding or resizing the paper structure.

A storage structure for containing paper structures includes a body defining an enclosure with an aperture disposed on a side of the body, a plurality of paper structures disposed in the enclosure, and each of the plurality of paper structures includes a first paper section having a first height, a second paper section coupled to the first paper section and the second paper section having a second height longer than the first height, a fold disposed between the first paper section and the second paper section and the second paper section is disposed in a vertical manner with respect to the first paper section, and at least one of the plurality of paper structures is disposed through the aperture and each subsequent paper structure is disposed with the second paper section of the subsequent paper structure disposed between the first paper section and the second paper section of a prior paper structure. The paper structure may further comprise an adhesive disposed on the second paper section.

A method for processing paper structures in a storage structure includes providing a storage structure having a bottom, a top having an aperture formed therein, and a plurality of vertical sidewalls disposed between the bottom and top, providing a plurality of rolling paper structures sequentially disposed in the enclosure, the plurality of rolling paper structure comprises at least a terminal rolling paper structure and at least one subsequent rolling paper structure in a vertically disposed manner from the terminal paper structure, and each of the plurality of rolling paper structures comprise a first paper section having a first height, a second paper section coupled to the first paper section and the second paper section having a second height longer than the first height, and a fold disposed between the first paper section and the second paper section and the second paper section is disposed in vertical manner with respect to the first paper section, and disposing the second paper section of each of the subsequent rolling paper structures between the first paper section and the second paper section of a prior rolling paper structure, and providing at least one subsequent rolling paper structure to the bottom of the storage structure.

A rolling paper includes a first paper section having a first height, a second paper section coupled to the first paper section and the second paper section having a second height longer than the first height, a fold disposed between the first paper section and the second paper section and the second paper section is disposed in vertical manner with respect to the first paper section, a first adhesive disposed along a width edge of the second paper section and having an orientation facing the first paper section and a second adhesive disposed along a height edge of the first paper section and the second paper section.

One aspect of the invention is to provide a method for preparing an adhesive comprising a hemp additive including the steps of dissolving an adhesive in water to form an adhesive solution (step a)); suspending a hemp powder in water to form a hemp solution (step b)); and mixing the hemp solution with the adhesive solution (step c)).

Preferably, artificial or natural colorings, artificial or natural flavorings, artificial or natural sweeteners or combinations thereof to the adhesive solution are added after step (a).

In one embodiment the method further comprises the steps of filtering the hemp solution during step (b) by placing the hemp powder in a filter sock and pouring water over the hemp powder and through the filter sock to form the hemp solution.

In another embodiment the method further comprises the steps of sifting the hemp powder during step (b) by placing the hemp powder in a sifter, sifting the hemp powder through a sieve and adding the sifted hemp powder to water directly to form the hemp solution.

Preferably the method further comprises the step of filtering the hemp solution after step (b) by pouring the hemp solution through a filter sock or a sieve.

Preferably, the method further comprises the step of shaking the hemp solution before step (c).

It might be advantageous to add about 400 grams (g) of hemp powder to about 4 liters (L) of water.

In one embodiment 400 grams (g) of hemp powder is placed in a filter sock and about 4 liters (L) of water is poured over the hemp powder and through the filter sock to form the hemp solution.

In another embodiment 400 grams (g) of hemp powder is placed in a sifter, the hemp powder is sifted through a sieve and the sifted hemp powder is added to about 4 liters (L) of water directly to form the hemp solution.

Preferably, the hemp solution is mixed with the adhesive solution at a ratio between about 1:10 and about 1:100 hemp to adhesive solution. Further preferably the hemp solution is mixed with the adhesive solution at a ratio between about 1:20 and about 1:100 hemp to adhesive solution.

In an embodiment of the method the adhesive solution comprises cellulose-based adhesives, acacia-based adhesives, sugar-based adhesives or combinations thereof.

Preferably, the adhesive solution further comprises artificial or natural colorings, artificial or natural flavorings, artificial or natural sweeteners or combinations thereof.

Preferably, the adhesive is an acacia-based adhesive. Preferably, the sweetener is D-glucose.

In another aspect a method for preparing an adhesive comprising a hemp additive is provided including the steps of dissolving an adhesive in water to form an adhesive solution; placing a hemp powder in a filter sock and pouring water over the hemp powder and through the filter sock to form a hemp solution; and mixing the hemp solution with the adhesive solution.

In another aspect a rolling paper is provided, comprising a paper having a height, in some cases occasionally named total height or combined height, and a width; a first adhesive disposed along a width edge of the paper, wherein the first adhesive comprises a hemp additive, and a second adhesive disposed along a height edge of the paper, wherein the second adhesive comprises the hemp additive.

Preferably the first and/or second adhesive comprises cellulose-based adhesives, acacia-based adhesives, sugar-based adhesives or combinations thereof. Furthermore, the first and/or second adhesive may comprise water, artificial or natural colorings, artificial or natural flavorings, artificial or natural sweeteners or combinations thereof.

Preferably, the first and/or second adhesive is applied at a weight in the range of about 20 grams per square meter and about 110 grams per square meter.

Preferably, the first and/or second adhesive is an acacia-based adhesive. Preferably the sweetener is D-glucose.

Another aspect of the invention is a rolling paper, comprising a first paper section having a first height, a second paper section coupled to the first paper section and the second paper section having a second height longer than the first height, a fold disposed between the first paper section and the second paper section and the second paper section is disposed in vertical manner with respect to the first paper section, a first adhesive disposed along a width edge of the second paper section and having an orientation facing the first paper section, wherein the first adhesive comprises a hemp additive; and a second adhesive disposed along a height edge of the first paper section and the second paper section, wherein the second adhesive comprises the hemp additive.

Preferably, the first and/or second adhesive comprises cellulose-based adhesives, acacia-based adhesives, sugar-based adhesives or combinations thereof. Furthermore, the first and/or second adhesive may comprise water, artificial or natural colorings, artificial or natural flavorings, artificial or natural sweeteners or combinations thereof.

Preferably, the first and/or second adhesive is applied at a weight in the range of about 20 grams per square meter and about 110 grams per square meter.

Preferably, the first and/or second adhesive is an acacia-based adhesive. The sweetener may be D-glucose.

### BRIEF DESCRIPTION OF THE DRAWINGS

FIG. 1A is a schematic side view of one embodiment of a paper structure;
FIG. 1B is a schematic side view of another embodiment of a paper structure;
FIG. 2A is a perspective view of one embodiment of interleaved paper structures; and
FIG. 2B is a schematic side view of one embodiment of interleaved paper structures;
FIG. 3A is a front perspective view of one embodiment of a storage structure;
FIG. 3B is a side perspective view of one embodiment of a storage structure;
FIG. 3C is a side perspective and side views of one embodiment of a storage structure having a stack of papers structures disposed therein; and
FIG. 4 is a top view of another embodiment of a rolling paper structure of the invention described herein.

### DETAILED DESCRIPTION OF THE PREFERRED EMBODIMENTS

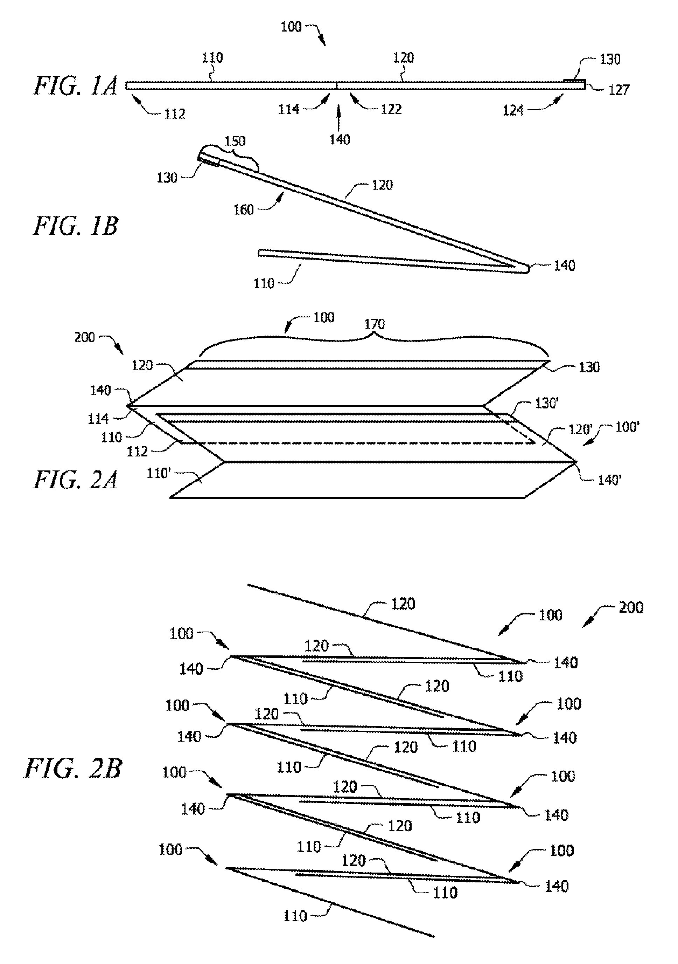

Aspects of the invention generally provide methods and structures for paper structures, such as rolling paper structures. Referring to FIG. 1A, one embodiment of a paper structure 100, such as a rolling paper structure, is shown in a schematic side view. The paper structure 100 includes a first paper section 110, a second paper section 120, and an optional adhesive 130 disposed on the second paper section 120. The paper structure 100 also has a thickness 127.

The first paper section 110 has a first end 112, a second end 114 opposite the first end 112, and a first length, or first height, between the first end 112 and the second end 114. The length of the paper is commonly referred to as a "height" in the industry. The second paper section 120 has a third end 122, a forth end 124, and a second height between the third end 122 and the fourth end 124.

The second paper section 120 has a second length, or second height, that comprises greater than 50% of the sum of the heights of the first paper section 110 and the second paper section 120. In one embodiment of the paper structure 100, the second paper section 120 may have a second height between about 55% and about 90%, such as between about 65% and about 85%, for example, about 67%, of the sum of the heights of the first paper section 100 and second paper section 120. The second paper section has a second height that provides for forming a portion 150 of the second paper section that extends beyond the first paper section 110 when folded as shown in FIG. 1B.

Examples of paper structures 100 may have a first height between about 10 millimeters and about 25 millimeters and may have a second height between about 20 millimeters and about 95 millimeters to form a combined first height and second height between about 30 millimeters and about 110 millimeters at the respective second height percentages described herein. One example of such a paper structure includes a paper structure having a combined first and second heights of 44 mm that may have a first height between about 13 mm and about 19 mm, corresponding to a second height between about 25 mm and 31 mm, for example, about 15 mm or about 16 mm, corresponding to a second height of about 28 mm and 29 mm. A first height between about 12 mm and about 20 mm for paper structures having heights between 38 mm and about 54 mm may be used to form second heights with the indicated second heights within the percentages described herein for the second height. In another example, a paper structure having a combined height of 100 mm may have a first height that is between about 15 mm and about 40 mm corresponding to a second height between about 60 mm and 85 mm, for example, between about 25 mm and about 30 mm corresponding to a second height between about 70 mm and 75 mm at the respective second height percentages described herein.

The percentage of the second height may vary based on the total height of the paper used. It is believed that the second height of the second paper section will decrease with decreasing combined heights, i.e., smaller paper structures, in order to provide a sufficient area on the first paper section for the tobacco products to be deposited. However, the respective heights may vary for papers of different lengths based on the preferences of the end users, and the above examples are provided to illustrate the invention and are not to be interpreted or construed as limiting the scope of the invention.

Referring to FIG. 2A, a perspective view of one embodiment of the paper structure 100 is shown having four edges defining a total height as described above and a width 170. The height to width ratio may be between about 1:1 to 1:10, such as between about 1:1.5 and about 1:3, for example, about 1:1.8. Examples of a paper structure of suitable height and width ratio is a paper structure having height of about 38 mm and a width of about 70 mm, for a ratio of about 1:1.8, or a paper structure having a height of about 44 mm and a width of about 79 mm, for a ratio of about 1:1.8, to form a rectangular shape.

The paper structure 100 may be a paper material derived from a plant fiber. Suitable plant fiber materials may be selected from the group of cellulose paper, cellophane (cellulose and glycerin), hemp, palm, banana peel, rice paper, tobacco leaf, flax, wood fiber, and combinations thereof. The paper materials may be of a transparent material, such as transparent cellulose paper or cellophane. The paper material may further be patterned or have designs formed thereon by conventional methods for forming designs on the paper structure. The paper of the paper structure may have a weight between about 8 grams per square meter (gsm) and about 30 gsm if it is bleached or unbleached paper. If homogenized tobacco sheets are used, then the paper weight may be between about 8 gsm and about 50 gsm.

The optional adhesive material 130 is disposed on the second paper section 120. In one embodiment of the paper structure having an adhesive, the adhesive 130 is disposed proximal to an edge of the second paper section 120 such as edge 124 as shown in FIG. 1A. The adhesive 130 may be disposed at a length (height) between about 1% and about 25% of the combined first height and second height of the paper structure 100 along the second paper section 120 as shown in FIG 1A. For example, the adhesive may be deposited at a length of about 9% of the height of the paper structure 100 along the second paper section of a 54 mm height paper structure. Alternatively, the adhesive may be disposed between about 1 mm and about 10 mm of the height of the paper structure 100 along the second paper section 120. For example, the adhesive may be disposed for a length of about 5 mm along the second paper section of a 54 mm height paper structure. The adhesive 130 is preferably disposed along a portion of the second paper section 120 at the terminal end of the of the second paper section as identified as the fourth edge 124 as shown in FIG. 1A.

The adhesive 130 may be disposed on one side of the second paper section 120. Disposing the adhesive on only one side of the section paper section 120 allows the adhesive 130 to have an orientation facing the first paper section 110 when folded as shown in FIG. 1B. In such a configuration, the folded paper structure 100 may have an adhesive disposed on the inner side 160 of the folded paper structure 100. Preferably, the second paper section 120 is disposed vertically above the first paper section 110 as shown in the figure. Alternatively, the first paper section 110 may be disposed vertically above the second paper section 120. The adhesive material 130 may be deposited on all or a portion of the extended portion 150 of the second paper section 120 that extends beyond the first paper section 110 as shown in FIG. 1B. Disposing the adhesive 130 on the extended portion 150 allows the paper structure 100 to be folded along the fold 140 with the adhesive 130 without contact between the adhesive 130 and the first paper section 110.

The adhesive 130 may be transparent, translucent, or opaque material. In one embodiment of the adhesive 130, the adhesive is opaque to indicate which portion and which side of the paper structure 100 the adhesive 130 is disposed. The adhesive 130 may be any adhesive which adheres to the surface of the paper structure.

In an embodiment, suitable adhesive materials include a material selected from the group of cellulose-based adhesives, such as cellulose gum. One example of cellulose gum is sodium carboxymethylcellulose. Additionally, the adhesive may comprise or further include a non-standard formulation containing acacia gum (i.e., arabic gum), sugar gum, animal gum, or combinations thereof. The adhesive material may contain other components including water, artificial or natural colorings, artificial or natural flavors, artificial or natural sweeteners or combinations thereof. One example of an artificial sweetener is sodium saccharine, and of a natural sweetener is D-glucose (i.e., Dextrose). One example of an adhesive solution is a cellulose-based adhesive of ninety-seven percent water, two percent cellulose gum, and one percent flavoring. Artificial colorings, such as a pigment or food coloring, may be added to the adhesive to increase the opacity when dry so that the adhesive line can be seen on the paper structure 100. The coloring, flavors and sweeteners may be added as components (preferably food grade) and the amounts present may be adjusted accordingly to control opacity, flavoring and sweetness. The adhesive 130 may be applied at a weight in the range of between about 20 grams per square meter (g/m²) and about 110 grams per square meter (g/m²).

In another embodiment, suitable adhesive materials include a material selected from the group of acacia-based adhesives, such as acacia gum (i.e., arabic gum). Additionally, the adhesive may comprise or further include a non-standard formulation containing cellulose gum, sugar gum, animal gum, or combinations thereof. The adhesive material may contain other components including water, artificial or natural colorings, artificial or natural flavors, artificial or natural sweeteners or combinations thereof. One example of an artificial sweetener is sodium saccharine, and of a natural sweetener is D-glucose (i.e., Dextrose). One example of an adhesive solution is an acacia-based adhesive of ninety-seven percent water, two percent acacia gum, and one percent sweetener (e.g., Dextrose). Artificial colorings, such as a pigment or food coloring, may be added to the adhesive to increase the opacity when dry so that the adhesive line can be seen on the paper structure 100. The coloring, flavors and sweeteners may be added as components (preferably food grade) and the amounts present may be adjusted accordingly to control opacity, flavoring and sweetness. The adhesive 130 may be applied at a weight in the range of between about 20 grams per square meter (g/m²) and about 110 grams per square meter (g/m²)_{.}

In yet another embodiment, suitable adhesive materials include a material selected from the group of sugar-based adhesives, such as sugar gum. Additionally, the adhesive may comprise or further include a non-standard formulation containing cellulose gum, acacia gum (i.e., arabic gum), animal gum, or combinations thereof. The adhesive material may contain other components including water, artificial or natural colorings, artificial or natural flavors, artificial or natural sweeteners or combinations thereof One example of an artificial sweetener is sodium saccharine, and of a natural sweetener is D-glucose (i.e., Dextrose). One example of an adhesive solution is a sugar-based adhesive of ninety-seven percent water, two percent sugar gum, and one percent sweetener (e.g. Dextrose). Artificial colorings, such as a pigment or food coloring, may be added to the adhesive to increase the opacity when dry so that the adhesive line can be seen on the paper structure 100. The coloring, flavors and sweeteners may be added as components (preferably food grade) and the amounts present may be adjusted accordingly to control opacity, flavoring and sweetness. The adhesive 130 may be applied at a weight in the range of between about 20 grams per square meter (g/m²) and about 110 grams per square meter (g/m²).

In a preferred embodiment of the invention, the adhesive comprises a hemp additive. The hemp additive may be added as a component or, preferably, as a hemp protein extract or hemp cellulose solution. One example of a hemp solution is prepared by placing about 400 grams (g) of a hemp powder in a wool screen (i.e., filter sock) and pouring about 4 liters (L) of water over the hemp powder in the filter sock to produce an aqueous suspension of < 200 micron hemp particles. In a preferred embodiment, the mesh size of the wool screen is about 200 microns. Another example of a hemp solution is prepared by placing about 400 grams (g) in a sifter, sifting the hemp powder through a sieve and adding the sifted hemp powder to about 4 liters (L) of water directly to produce an aqueous suspension of < 200 micron hemp particles. In a preferred embodiment, the mesh size of sieve is about 200 microns. After vigorous shaking to disperse any settled hemp particles, the hemp solution may be added to the adhesive solution at a volume ratio in the range of about 1:10 and about 1:100 hemp to adhesive solution. In a preferred embodiment, the hemp solution is added to the adhesive solution at a volume ratio in the range of about 1:20 and about 1:100. In an especially preferred embodiment, the adhesive is an acacia-based adhesive and the sweetener is sodium saccharine or D-glucose (i.e., Dextrose).

The paper structure 100 may be folded to provide the shape as shown in FIG. 1B. The paper structure 100 is folded at the intersection of, or between the, the first paper section 110 and the second paper section 120. Alternatively, the fold 140 may be defined by the second end 122 and the third 124 or the fold 140 may comprise both the second end 122 and the third end 124. The second height which is longer than the first height allows a portion 150 of the second paper section 120 to extend beyond the first paper section 110 when the paper is folded.

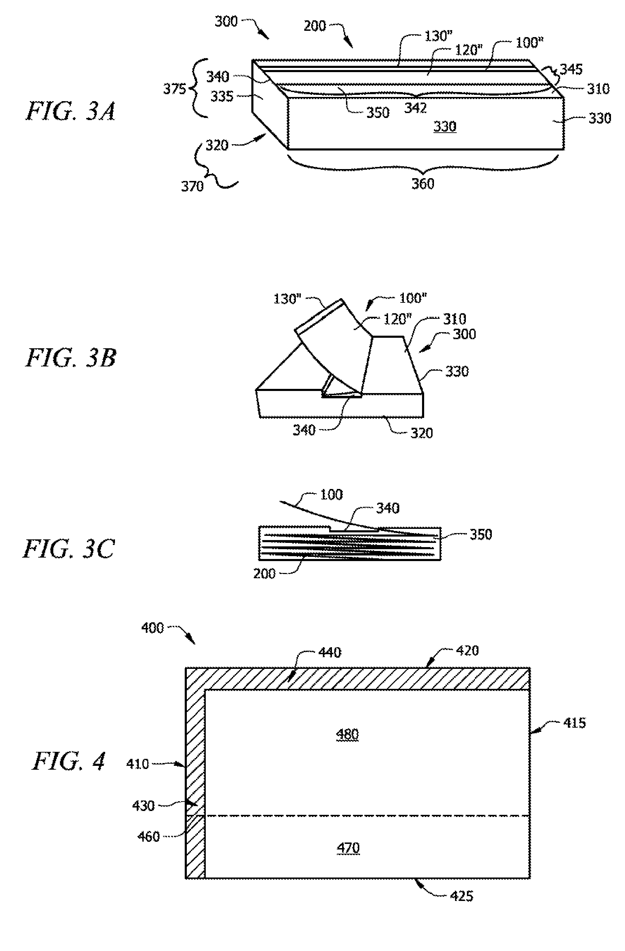

FIGS. 2A-2B illustrate perspective and side views of one embodiment of integrating multiple paper structures 100 to form a stack 200 of paper structures 100. The stack may be disposed in a storage structure, such as container 300 as shown in FIGS. 3A-3C. In one embodiment of the stack 200, as shown in FIG. 2A, the second paper section 120 of the paper structure 100 is vertically disposed above the first paper section 110. However, the invention contemplates that a stack 200 may be formed with paper structures 100 having the first paper section 110 vertically disposed above the second paper section 120.

Referring to Figure 2A, the paper structures 100 may be integrated, or interleaved, by disposing the second paper section 120' of the second paper structure 100' between the first paper section 110 and second paper section 120 of the first paper structure 100. The adhesive 130' of the second paper section 120' may be disposed in a manner as to provide an adhesive face with an orientation directed to the first paper section 110 on which the second paper section 120' is positioned. Positioning the second paper section 120' of the second paper structure 100' provides for the first paper structure 100 and the second paper structure 100' to be vertically displaced from one another for integration into a stack 200. The second paper structure 100' may be horizontally displaced in a direction of 180° degrees, or an opposite orientation, to the first paper structure 100 as shown in FIG. 2A.

FIG. 2B illustrates a plurality of paper structures 100 having been integrated as described with reference to FIG. 2A herein to form a stack 200 having each subsequently integrated paper structure 100 with an opposite orientation and a corresponding downward vertical displacement from the prior paper structure. Such a stack 200 is suitable for positioning in a storage container. The stack 200 may comprise between about 2 and about 200 paper structures, and preferably between about 20 and about 100 paper structures.

The integrated stacked paper structures 100 as shown in FIGS. 2A-2B, also provide for repositioning of the stack of paper structures once a paper structure is removed from the stack. As the top paper structure 100 is pulled in a vertical manner, the first paper section 110 of the top paper structure 100 also vertically displaces the second paper section of the second paper structure disposed between the second paper section and the first paper section of the top paper structure. The second paper structure then assumes the top position of the stack, and such movement can be repeated for the remaining papers in the stack.

FIGS. 3A-3C illustrate a storage structure, such as a container 300, having a top 310, a bottom 320, a front side 330, a back side (not shown), and two end sides 335. The front side 330 defines the width 360 of the container 300, and the end sides 335 define the length 370 of the container 300. The container 300 defines an enclosure 350 in which a stack 200 of paper structures 100 may be disposed. The container 300 may have a width 360 corresponding to between about 0.005% and about 25% greater than the width of the paper structures 100 forming the stack 200 therein, for example, between about 0.5 mm and about 10 mm greater than the width of the paper structures 100.

The container 300 may have a length 370 (corresponding to the height of the paper structure as described herein) between about 0.01% and about 50% greater than the second height of the paper structures 100 forming the stack 200 therein, for example, between about 0.5 mm and about 10 mm greater than the second height of the paper structures 100. The height 375 of the container 300 may vary on the number, weight, and thickness of the paper comprising the paper structures 100 therein.

The top 310 of the container 300 defines an aperture 340. The aperture 340 may have a width 342 between about the width of the paper structure 100 and about 100% of the width 360 of the container 300. In one embodiment of the container 300, the aperture 340 has the same width as the container 300.

With all other considerations being equal, such as the number of paper structures 100 in a stack, the respective materials and thickness as well as the size of the container; the aperture may have a length 345 (corresponding to the height of the paper structure 100 as described herein) that varies based on the second height of the paper. In one embodiment, the aperture 345 is increased in length between about 0.25 mm and about 1 mm for every 1 mm increase in the second height of the paper structure from a 50% height of the combined first and second paper sections for a paper structure having a combined first and second heights between about 30 mm and about 100 mm, such as between about 38 and about 54 mm. For example, a 44 mm combined height paper structure, which conventionally would require a container with a 5 mm aperture length when the paper is folded in half, may require a container with an aperture length between about 6.5 mm and 11 mm (and possibly up to about a 15 mm aperture), for example, about 7 mm, for a second height between about 24 mm and about 37 mm, for example, about 28 mm, of the 44 mm combined height paper structure 100. It is believed by the inventors, for effective removal of paper structures through the aperture of the container, the length of the aperture should generally be increased as the second paper section length is increased beyond the 50% height of the combined first and second paper sections.

The stack 200 is disposed in the enclosure 350 as to provide a second paper section 120" with an adhesive section 130" of a terminal, or top, paper structure 100" to be disposed through the aperture 340. The integrated paper structures of the stack 200 allows for the top paper structure 100" to be removed from the stack 200 while concurrently positioning the subsequent paper structure to have the respective second paper section disposed through the aperture 340. The removal of the top paper structure with concurrently positioning the subsequent paper structure through the aperture 340 may be repeated for all of the paper structures in the stack 200. While not shown, a cover may be disposed over the aperture and any exposed paper structures to protect the paper structures disposed therein.

The container may be packaged as follow. The container 300 is provided as described above. The container may be in a disassembled or unfolded format, or alternatively, the container may be in a defining enclosure format as shown in FIG. 3A. A stack 200 of the rolling papers 100 described herein may then be placed on the container structure if flat or in the containing structure if the container is formed defining the enclosure. The stack 200 may be formed prior to providing to the container or may be formed in the container. If the container 200 is in the unfolded format after the stack is added or formed, the container 300 may then be folded to form the defining enclosure format as shown in FIG. 3A.

The stack 200 is formed by disposing a first paper structure 100 folded with a second paper section disposed vertically above the first paper section. A second folded paper structure is then interleaved with the first paper structure by disposing the first paper section of the second paper structure under the second paper section of the first folded paper structure. Alternatively, the folded paper sections may be interleaved by positioning the second paper section of the first paper structure between the first paper section and the second paper section of the second paper structure. This process can be repeated with a series of paper structures with each subsequent paper structure, i.e., third, being interleaved with the prior paper structure, i.e., second, as described above for the first and second paper structures to form a stack 200. The final paper structure, or terminal paper structure, is then positioned to have the respective second paper section disposed through the aperture in the container.

In operation, the second paper section of a terminal rolling paper structure of the one or more subsequent rolling paper structures is disposed through the aperture. The second paper section may then be pulled to remove the terminal paper structure. As the terminal paper structure is pulled, the first paper section of the terminal paper structure lifts or repositions the second paper section of the next paper structure through the aperture. The process is then repeated until all of the paper structures are removed from the container.

It is believed that the paper structures described herein provides for ease of use of rolling papers without the need to resize or reshape the paper to be used. It is also believed that the storage structure herein provides for removal and replacement of paper structures with folds at greater than 50% of the height of the paper structure.

Referring to FIG. 4, a second embodiment of the disposition of adhesives on a paper structure described herein is illustrated. The paper structure 400 has a length, also referred to as a height, having a first height edge 410, second height edge 415 and a width having a first width edge 420 and a second width edge 425, a first paper section 470, and a second paper section 480. A first adhesive 430, an adhesive is also known as a gumline, is deposited along the length of at least one of the first height edge 410 or second height edge 415 edge, and a second adhesive 440 is deposited along the width of at least one of the first width edge 420 or second height edge 425. A fold 460 may intersect one of the adhesives 430, 440 such as a fold along the height intersecting adhesive 430 at the intersection of a first section 470 and a second section 480 as shown in FIG. 4. The adhesives 430 and 440 may be disposed on the same side of the paper structure with the adhesive 440 disposed as to have an orientation directed to the first section when the paper structure 400 is folded.

The adhesive 440 may be disposed at a length (height) between about 1% and about 25% of the height of the paper structure 400 along at least one of the first width edge 420 or second height edge 425 as shown in FIG. 4. The adhesive 430 may be disposed at a width (height) between about 1% and about 25% of the width of the paper structure 400 along at least one of the first height edge 410 or second height edge 415 edge as shown in FIG. 4. For example, the adhesive may be deposited at about 9% of the height and/or width of the paper structure 400 along the respective edges of a 54 mm height paper structure. Alternatively, the respective adhesive layers may be disposed between about 1 mm and about 10 mm of the respective height or width of the paper structure 400 along the respective edges. For example, the adhesive may be disposed at about 5 mm of the height and/or width of the paper structure 400 along the respective edges of a 54 mm height paper structure. The respective adhesives are disposed proximal to the respective edges. The respective adhesives 430 and 440 may intersect at a corner formed by the respective height edges and width edges.

It is possible to use existing rolling paper production technology by modifying it to allow for the adhesive 430. Conventionally, using current production methods, the second adhesive 440 is applied to a large bobbin in bulk. The bobbin is unrolled through a gumming machine during which time an adhesive 440 is applied and dried. In order to implement the adhesive 430, a separate machine to apply gum may be employed or the gum can be applied onto each sheet after it has been cut. Alternatively, a double-width gum line extending widthwise can be applied to the bulk paper, after which it can be cut in two equal halves, resulting in two sheets, each with the appropriate adhesive 430.

A filter (not shown), such as a cellulose acetate or paper filter although any type of filter appropriate for use in smoking may be used with the respective adhesives 430 and 440. In practice, the rolling paper 400 is moistened along the adhesives 430, 440 after rolling the paper 400 around the tobacco. The adhesive 440 is used to adhere the rolling paper 400 to itself, with the adhesive 430 being used to adhere the rolling paper 400 to an inserted filter. The two adhesive paper structures 400 may be also be packaged as described herein.

Although exemplary embodiments of the present invention have been shown and described, many changes, modifications, and substitutions may be made by one having ordinary skill in the art without necessarily departing from the spirit and scope of the invention.

## Claims

1. A rolling paper, comprising:
a paper having a total height and a width;
a first adhesive disposed along a width edge of the paper, wherein the first adhesive comprises a hemp additive; and
a second adhesive disposed along a height edge of the paper, wherein the second adhesive comprises the hemp additive.

2. The rolling paper according to claim 1, wherein the first and/or second adhesive comprises cellulose-based adhesives, acacia-based adhesives, sugar-based adhesives or combinations thereof.

3. The rolling paper according to claim 2, wherein the first and/or second adhesive further comprises water, artificial or natural colorings, artificial or natural flavorings, artificial or natural sweeteners or combinations thereof.

4. The rolling paper according to claim 3, wherein the sweetener is D-glucose.

5. The rolling paper according to one of the claims 1 to 4, wherein the first and/or second adhesive is applied at a weight in the range of about 20 grams per square meter and about 110 grams per square meter.

6. The rolling paper according to one of the claims 1 to 5, wherein
the paper comprises a first paper section having a first height and a second paper section coupled to the first paper section and the second paper section having a second height longer than the first height, the combined first and second height being the total height;
a fold disposed between the first paper section and the second paper section and the second paper section is disposed in vertical manner with respect to the first paper section.

7. A method for preparing an adhesive for rolling papers comprising the steps of:
a. dissolving an adhesive in water to form an adhesive solution;
b. suspending a hemp powder in water to form a hemp solution;
c. mixing the hemp solution with the adhesive solution.

8. The method according to claim 7, further comprising the steps of adding artificial or natural colorings, artificial or natural flavorings, artificial or natural sweeteners or combinations thereof to the adhesive solution after step (a).

9. The method according to claim 7 or 8, further comprising the steps of filtering the hemp solution during step (b) by placing the hemp powder in a filter sock and pouring water over the hemp powder and through the filter sock to form the hemp solution.

10. The method according to claim 7 or 8, further comprising the steps of sifting the hemp powder during step (b) by placing the hemp powder in a sifter, sifting the hemp powder through a sieve and adding the sifted hemp powder to water directly to form the hemp solution.

11. The method according to claim 7 or 8, further comprising the step of filtering the hemp solution after step (b) by pouring the hemp solution through a filter sock or a sieve.

12. The method according to on of the claims 7 to 11, wherein about 400 grams (g) of hemp powder is added to about 4 liters (L) of water.

13. The method according to one of the claims 7 or 12, wherein the hemp solution is mixed with the adhesive solution at a ratio between about 1:10 and about 1:100 hemp to adhesive solution, preferably at a ratio between about 1:20 and about 1:100 hemp.

14. The method of claim 13, wherein the adhesive solution comprises cellulose-based adhesives, acacia-based adhesives, sugar-based adhesives or combinations thereof.

15. The method of claim 13, wherein the adhesive solution further comprises artificial or natural colorings, artificial or natural flavorings, artificial or natural sweeteners or combinations thereof.
